(19) Europäisches Patentamt
European Patent Office
Office européen des brevets

(11) **EP 4 622 250 A1**

(12) **EUROPEAN PATENT APPLICATION**

(43) Date of publication:
**24.09.2025  Bulletin 2025/39**

(21) Application number: **25164874.7**

(22) Date of filing: **19.03.2025**

(51) International Patent Classification (IPC):
*H04N 9/31* (2006.01)

(52) Cooperative Patent Classification (CPC):
**H04N 9/3147; H04N 9/3182; H04N 9/3194**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.03.2024  US 202463567995 P**
**07.02.2025  US 202519048431**

(71) Applicant: **Christie Digital Systems USA, Inc.**
**Cypress, CA 90630 (US)**

(72) Inventors:
• LIU, Elin Y.
  Toronto, Ontario, M5V 0K3 (CA)
• VAN EERD, Peter Anthony
  Guelph, Ontario, N1H 2A5 (CA)
• MACPHERSON, James B.
  Kitchener, Ontario, N2H 4W2 (CA)

(74) Representative: **ABG Intellectual Property Law, S.L.**
**Avenida de Burgos, 16D**
**Edificio Euromor**
**28036 Madrid (ES)**

(54) **DEVICE, SYSTEM AND METHOD FOR BLACK LEVEL BLENDING IN PROJECTORS**

(57)     A device controls at least two projectors to project color channel images at multiple video levels, with partial overlap in an overlap region. Using at least one sensor, the device acquires digital images of the projected color channels and determines functions of projected brightness relative to video level for each projector's points. The device selects brightness levels for points outside the overlap region to blend brightness inside and outside the overlap region when projecting black images. The device then determines video levels for each color channel using the functions and controls the projectors accordingly.

FIG. 5

EP 4 622 250 A1

**Description**

CROSS-REFERENCE TO RELATED APPLICATIONS

The present specification claims priority to United States Provisional Patent Application No. 63/567995, filed March 21, 2024, and to US patent application No. 19/048431, filed February 7, 2025, both of which are herein incorporated by reference.

FIELD

The specification relates generally to projectors, and specifically to a device, system and method for black level blending in projectors.

BACKGROUND

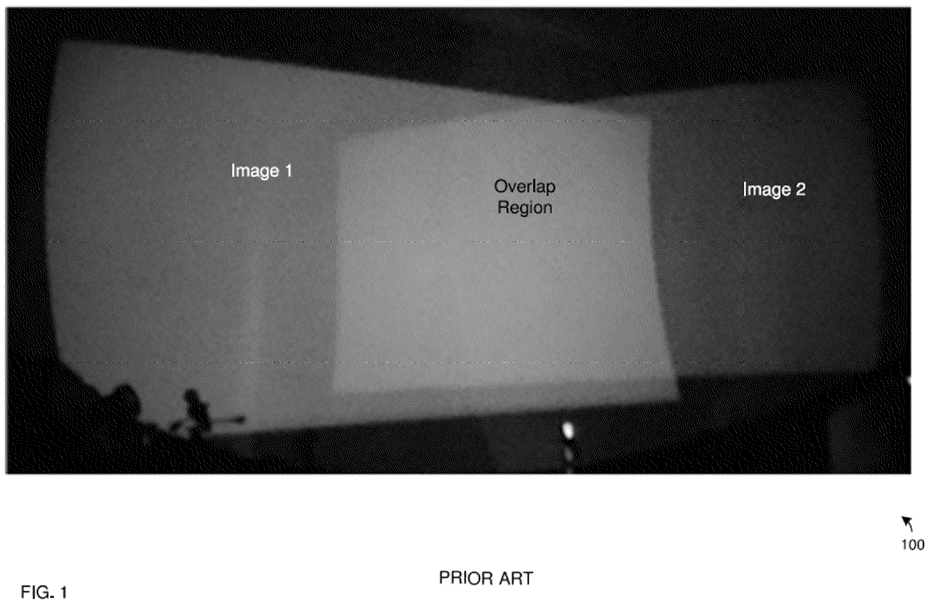

Projectors have a given black level, which may be defined as the light output from a projector even when it is projecting "black" and/or a minimum brightness pixel (e.g., a black pixel), and/or a minimum brightness image (e.g., a black image). Different projectors may have different black levels. These black levels may have varying intensities and tints, for example across a black image projected by a projector. Furthermore, overlapping projector regions will be brighter than non-overlap regions 418, for example as depicted in FIG. 1, which depicts a projected image 100 comprising two overlapping black images (Image 1 and Image 2), projected by two different projectors, according to the prior art; an overlap region 417 is clearly seen to be brighter than non-overlap regions 418. These differences in black level intensity and tint may be very jarring and distracting when low light content is being projected, such as an image of the night sky. Put another way, different projectors having different black levels with varying intensities and tints as seen in FIG. 1, show that brightness and color of the overlap region 417 may be different from adjacent non-overlap regions 418 of the projected images; in particular, in projectors, "black" does not mean an absence of light, and the light of the different black regions in the overlap region 417 is additive, leading to a brighter "black" than in the non-overlap regions 418.

Put another way, even when a projector is projecting "black" there is still some light output, which is referred to as the black level. Different projectors have different black levels. These black levels vary in both intensity and tint. Currently, it is difficult to blend the black levels of different projectors together.

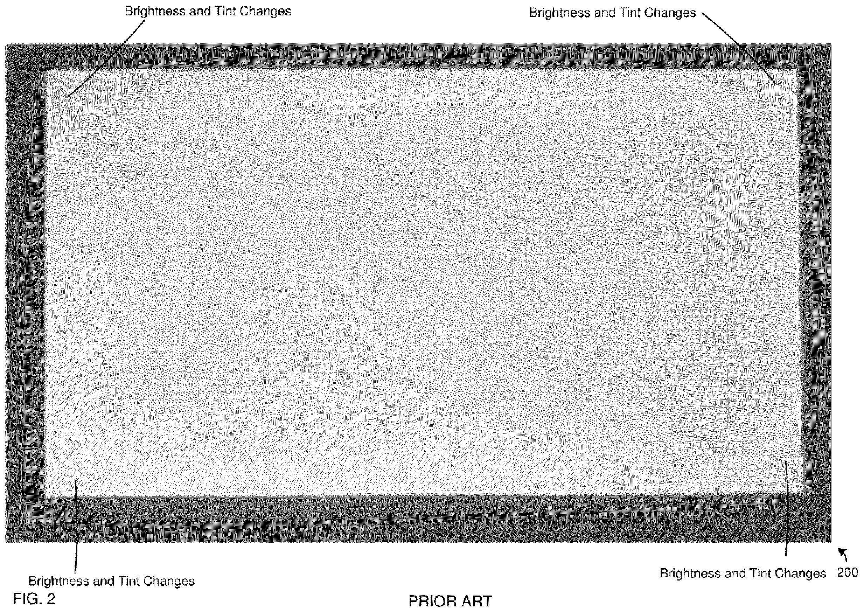

Additionally, a single projector may not have a uniform intensity and tint, for example as depicted in FIG. 2, which depicts a projected white image 200 from one projector, according to the prior art, with corner regions of the projected image 200 being of different brightnesses and tints/colors other regions of the image 200. A white image is shown merely to illustrate the variations in brightnesses and tints/colors and it is understood that a black image from this projector may have similar variations in brightnesses and tints/colors. Put another way, in the projected image 200, brightness and color (e.g., tint) changes, relative to a center of the projected image 200, at least at the corners of the projected image. These differences in the black level of a single projector may also be very distracting to any content that is displayed in low light. Put another way, a single projector may have a non-uniform black level that may be corrected.

Current methods for black level blending do not properly account for tinted black levels and differing brightness intensities either between projectors or for a single projector.

Furthermore, measuring these black levels with non-specialized cameras is difficult: even at high exposure values, the black light may be too dim to measure accurately and/or measurements may be dominated by noise.

Furthermore, it is difficult to determine what an intrinsic black level of a projector may be, and to determine what video level (e.g., a brightness level and/or power level, the like) should be sent to the projector that results in a given light output. Such determinations become even more complicated as an individual projector may not have a uniform black level in terms of tint or intensity.

In some current methods of black level blending, a user may manually input the relative brightness of different projectors in an attempt to blend the intensities of different projectors to smooth out the overlap regions.

However, manually inputting the relative brightness of different projectors may be a slow process. It requires a lot of guessing on the user's behalf and the black levels will need to be rendered multiple times. Additionally, it does not properly account for the different brightness variations of different projectors or the tint.

A more automated process of black level blending involves taking a series of camera images through a binary search to estimate the relative intrinsic brightnesses between projectors. However, this method is not always successful and/or may be processing intensive. Furthermore, iteratively taking pictures to estimate the relative black levels between different projectors also does not properly account for the different brightness variations of different projectors or the tint. Additionally, it does not account for the different camera sensitivities between different projectors.

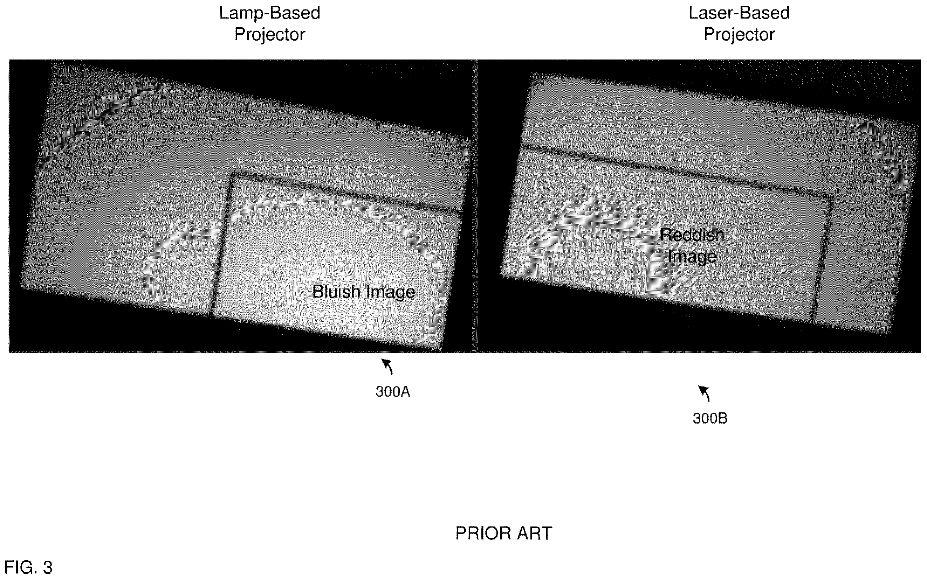

For example FIG. 3 depicts images 300A, 300B acquired by a camera, according to the prior art, with the image 300A comprising a white image projected by a lamp-based projector onto a screen (e.g., on the left hand side of FIG. 3) and the image 300B comprising a white image projected by a laser-based projector (e.g., on the right hand side of FIG. 3) onto the screen (e.g., at different times). While reproduced in black and white, the image 300A from the lamp-based projector, as acquired by the camera, is understood to be blue-tinted, and is labelled as such, and the image 300B from the laser-based projector, as acquired by the camera, is red-tinted, and is respectively labelled as such. While both images may be nominally white, the camera may generate images 300A, 300B that are tinted.

BRIEF DESCRIPTIONS OF THE DRAWINGS

For a better understanding of the various examples described herein and to show more clearly how they may be carried into effect, reference will now be made, by way of example only, to the accompanying drawings in which:

FIG. 1 depicts an example of overlapping projector image having different black levels with varying intensities and tints, according to the prior art.
FIG. 2 depicts an example of a single projector image having a non-uniform black level, according to the prior art.
FIG. 3 depicts an example of camera sensitivities to different projector types, according to the prior art.
FIG. 4 depicts example of a system that may be used to implement methods for black level blending; in particular, the system is shown before implementing of a method of black level blending, according to non-limiting examples.
FIG. 5 depicts a flowchart of a method of black level blending, according to non-limiting examples.
FIG. 6 depicts an example simplified array of points of an image projected by a projector, and corresponding functions for the points, according to non-limiting examples.
FIG. 7, FIG. 8 and FIG. 9 show an example dataset collected when implementing the method of FIG. 5, and which may be used to determine a function of a corresponding point of the array of FIG. 6, according to non-limiting examples.
FIG. 10 depicts the system of FIG. 4, before implementing of a method of black level blending, according to non-limiting examples.
FIG. 11 depicts an image projected by a projector before and after implementing of a method of black level blending, according to non-limiting examples.

DETAILED DESCRIPTION

A device, system and method of automated black level blending, as provided in the present specification, may enable characterization of black levels of projectors of a plurality of projectors, for example by determining respective functions of respective light output by the projectors on a point-by-point (e.g., pixel-by-pixel) basis (e.g., and/or every Nth pixel combined with interpolation/extrapolation, and the like), and a color channel-by-color channel basis. The functions are generally determined using a photon sensor (e.g., a camera and/or one or more cameras), and the like. As present methods includes a separate characterization of a function for each color channel, on a point-by-point basis, the present methods may further account for tinted black levels.

In particular, automated black level blending as provided herein, relies on a series of measurements of images projected by the projectors, at varying brightnesses of different color channels, using one or more sensors. An estimation of a function of the light output for each projector, on a point-by-point basis, for the different color channels, results, which may enable determination of black levels to which the points of the projectors may be controlled to blend black levels of points outside an overlap region 417 of the images with points of the overlap region 417. Such functions may be linear. Regardless, such functions may enable a determination of a brightness of a minimum video level (e.g., black level) that may be otherwise too dim to measure directly using a camera, and the like. Furthermore, as functions for the different color channels results, on a point-by-point basis the functions may be used to calculate an amount of light, and a respective color thereof, needed to reach a desired black level and/or a desired color for any region of an image projected by a projector.

Indeed, while the term "black level" may refer to a minimum intrinsic brightness of a point and/or an image projected by a projector, for example at a zero video level (e.g., minimum power), the term "black level" may further refer to any suitable brightness and/or color of a "black" projected by a projector.

Furthermore, the term "video level" as used herein may refer to a power level and/or brightness to which points of a projector are controlled, and that may vary from 0% to 100%, and/or 0 to 1, on a normalized scale, with "0" being a minimum level (e.g., corresponding to an intrinsic black level), and "100" and/or "1" being a maximum level.

Furthermore, the term "point" as used herein may correspond to a pixel of an image projected by a projector, and/or any minimum region of such an image that may be characterized via a sensor as described herein. Hence, for example, a point may correspond to a pixel and/or a plurality of pixels that represent the smallest region of an image projected by a projector for which brightness may be controlled to form an image. Alternatively, or in addition, points may correspond to every Nth pixel and/or every Nth pixel with estimates of other pixels determined via interpolation techniques and/or extrapolation techniques, and the like, amongst other possibilities, with "N" being on the order of 2 to 20 pixels, and the like, though "N" may further vary with resolution of an image.

Furthermore, the term "color channel" as used herein may refer to one component of color information that makes up an image being projected by a projector. For example, many projectors generate images by combining three primary color channels: red, green, and blue (RGB). Each color channel corresponds to a respective wavelength range of light, and by varying the intensity of each color channel, a projector may produce a wide spectrum of colors. However, while RGB is one example of three primary color channels, any suitable number of color channels is within the scope of the present specification. For example, some projectors may rely on four color channels, such red, green, blue and white (RGBW), while other projectors may rely on six color channels, such red, green, blue, cyan, magenta, and yellow (RGBCMY).

Furthermore, it is understood that a color channel may provide light according to respective color response curves across the spectrum of light visible humans, that is stronger for certain wavelengths and weaker for other wavelengths; as an example, a red color channel may include red, green and blue wavelengths of light but the red wavelengths may be of higher intensity than the green and blue wavelengths, such that light for that color channel appears red to a human viewer.

Furthermore, it is understood that a color channel may provide light primarily at an intrinsic color wavelength range, but a camera, and the like, acquiring digital images of projected color channel images may "sense" wavelengths of other colors as particular color sensors of a camera may be sensitive over a wavelength range that is wider than a respective wavelength range of a projected color channel, which may be referred to as "cross-talk". Put another way, digital images of a projected red color channel image may include a green component and/or a blue component due to a green sensor and a blue sensor in the camera that acquired the digital images being at least partially responsive to any light entering the camera.

Furthermore, the term "sensor" as used herein may refer to a camera that acquires digital images of images projected by a projector, for example onto a screen and/or any other suitable surface. However, any suitable sensor and/or photon sensor, is within the scope of the present specification.

It is furthermore understood that, for many projectors, as video level increases, a projected brightness (e.g., as measured by a sensor) may increase linearly. As such, a function that relates projected brightness and projector video level may comprise a linear function. However, in other examples, as video level increases, a projected brightness (e.g., may increase in any suitable manner, such as quadratically, a gamma curve, and the like, amongst other possibilities. Hence, while linear functions are used as examples herein, a function that relates projected brightness and projector video level may comprise any suitable function.

A first aspect of the present specification provides a method comprising: controlling, via a computing device, at least two projectors to project respective color channel images for a plurality of color channels, and at a plurality of video levels, the color channel images at least partially overlapping in an overlap region; acquiring, via the computing device, using at least one sensor, respective digital images of the respective color channel images at the plurality of video levels; determining, via the computing device, from the respective digital images, respective functions of projected brightness with respect to video level for the plurality of color channels, the respective functions for respective projected points of the at least two projectors; selecting, via the computing device, respective brightnesses for the respective projected points outside the overlap region that blend brightnesses of the overlap region and non-overlap regions, when the at least two projectors project respective black images; determining, via the computing device, using the respective functions, respective video levels for the plurality of color channels for the projected points; and controlling, via the computing device, the respective projected points of the at least two projectors to the respective video levels. In preferred embodiments of the method, the at least one sensor comprise at least one of a charge coupled device and a digital camera.

A second aspect of the present specification provides a computing device comprising: a controller; and a computer-readable storage medium having stored thereon program instructions that, when executed by the controller, causes the controller to perform a set of operations comprising: controlling at least two projectors to project respective color channel images for a plurality of color channels, and at a plurality of video levels, the color channel images at least partially overlapping in an overlap region; acquiring, using at least one sensor, respective digital images of the respective color channel images at the plurality of video levels; determining, from the respective digital images, respective functions of projected brightness with respect to video level for the plurality of color channels, the respective functions for respective projected points of the at least two projectors; selecting respective brightnesses for the respective projected points outside the overlap region that blend brightnesses of the overlap region and non-overlap regions, when the at least two projectors project respective black images; determining, using the respective functions, respective video levels for the plurality of color channels for the projected points; and controlling the respective projected points of the at least two projectors to the respective video levels.

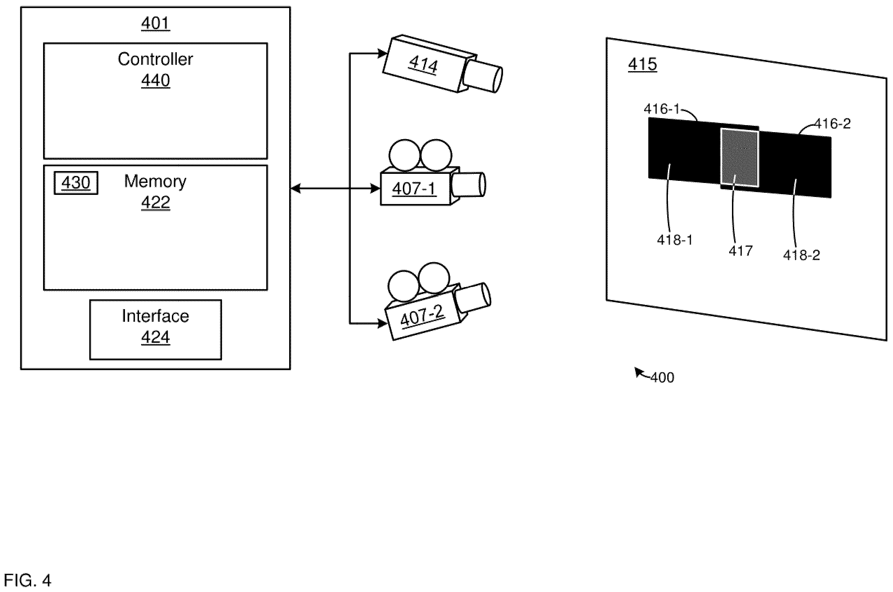

Attention is next directed to Fig. 4 which depicts a system 400 for digital black level blending in projectors.

The system 400 comprises a computing device 401 (interchangeably referred to hereafter as the computing device 401, but which may include any suitable combination of one or more computing devices), a plurality of projectors 407-1, 407-2 (interchangeably referred to, collectively, as the projectors 407 and, generically, as a projector 407); at least one sensor 414 (e.g., a camera); and an object, including, but not limited to, a screen 415, onto which images from projectors 407 are projected. Indeed, it is assumed that each projector 407 is mounted relative to the screen 415 such that images from the projectors 407 are projected onto the screen 415. Further, it is assumed that the computing device 401, in combination with the projectors 407 and the sensor 414, may be used to implement the methods described herein.

In particular, the at least one sensor 414 is arranged to capture digital images of the screen 415 and specifically of images projected onto the screen 415 by the projectors 407, for example when the projectors 407 are individually controlled to project images of various brightnesses and/or shades of red, green, and blue, so that the at least one sensor 414 may be used to acquire color digital images of the projected images 416. In some examples, the projectors 407 may be controlled to project images of various brightnesses (e.g., shades of gray) so that the at least one sensor 414 may be used to acquire color digital images of the projected images 416.

While the computing device 401 is shown as being in communication with the projectors 407 and the sensor 414, the system 400 may include other computing devices and/or communication devices communicatively located between the computing device 401 and the projectors 407/sensor 414, for example a device which generates and/or manipulates a video signal provided to the projectors 407.

However, while present implementations are described with respect to the screen 415, in other implementations, the screen 415 may be replaced with an object, including a three-dimensional object, and the projectors 407 may projection map onto the object.

Each of the projectors 407 may comprise a respective image modulator (not depicted in FIG. 4) and furthermore the projectors 407 are located to project respective images 416-1, 416-2 (interchangeably referred to, collectively, as images 416 and, generically, as an image 416) onto the screen 415, formed by respective image modulators of the projectors 407, the respective images 416 overlapping on screen 415 in one or more overlap regions 417. Indeed, as there are two projectors 407, one overlap region 417 results, with the image 416-1 including one respective non-overlap region 418-1, and the image 416-2 including one respective non-overlap region 418-2.

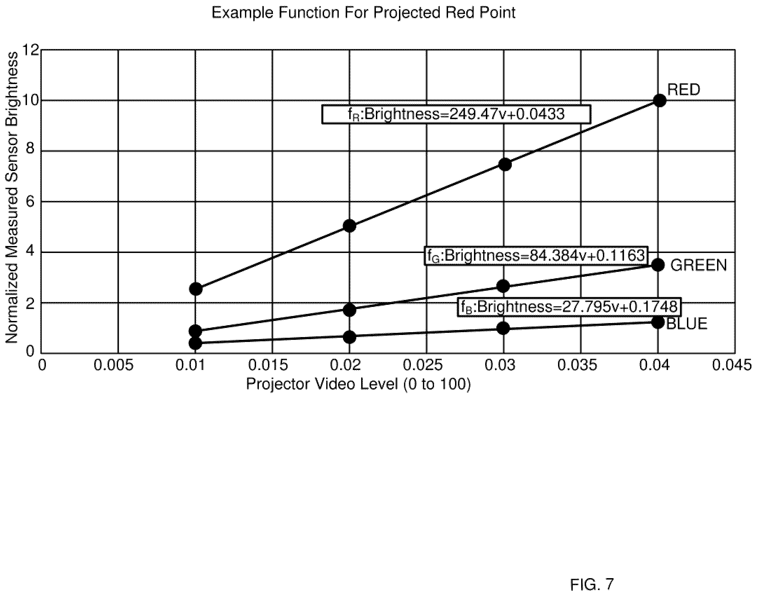

As depicted, the non-overlap regions 418 appear to be black, but are understood to have some residual brightness, as described with respect to FIG. 7, FIG. 8 and FIG. 9. Hence, the overlap region 41 appears to be a lighter "black" (e.g., gray) as the light from the images 416 add together in the overlap region 41. To better distinguish the overlap region 417 from the non-overlap regions 418, a white line is drawn around the overlap region 41 merely to indicate a perimeter of the overlap region 417. While the white line is understood not to be present in practice, the white line shows there is an abrupt interface in brightness (and possibly color) between edges of the overlap region 417 and the non-overlap regions 418.

Furthermore, while two projectors 407 are depicted, system 400 may comprise any suitable number of projectors 407 that project overlapping images 416. Which may result in all respective images 416 from all projectors 407 at least partially overlapping, and/or only adjacent images 416 overlapping. Hence, one or more overlap regions 417 may result.

Furthermore, the projectors 407 may comprise any combination of any suitable type of projectors including, but not limited to, lamp-based projectors, laser-based projectors, and the like.

Similarly, while one sensor 414 is depicted, system 400 may comprise any suitable number of sensors 414 arranged to acquire digital images of the images 416. The sensor(s) 414 may comprise any suitable number and/or combination of digital cameras, video cameras, charge-coupled devices (CCD), and the like, and/or any suitable sensor that may acquire digital images.

The computing device 401 may comprise any suitable combination of one or more computing devices, including but not limited to a graphics processing unit (GPU), a graphics processing device, a graphics processing engine, a video processing device, a personal computer (PC), a server, and the like, and generally comprises a controller 440, a memory 422 and a communication interface 424 (interchangeably referred to hereafter as interface 424) and optionally any suitable combination of input devices and display devices.

The interface 424 comprises any suitable wired or wireless communication interface configured to communicate with the projectors 407 and the sensor 414 in a wired and/or wireless manner as desired. Communication links and/or communicative coupling between components of the system 400 are represented using double-ended arrows.

The controller 440 may comprise a processor and/or a plurality of processors, including but not limited to one or more central processors (CPUs) and/or one or more processing units; either way, the controller 440 comprises a hardware element and/or a hardware processor. Indeed, in some implementations, the controller 440 may comprise an ASIC (application-specific integrated circuit) and/or an FPGA (field-programmable gate array) specifically configured to implement specific digital black level blend functionality as described herein. Hence, the computing device 401 is preferably not a generic computing device, but a device specifically configured to implement specific digital black level blend functionality as described herein. For example, the computing device 401 and/or the controller 440 may specifically comprise a computer executable engine configured to implement specific digital black level blend functionality as described herein.

The memory 422 may comprise a non-volatile storage unit (e.g., Erasable Electronic Programmable Read Only Memory ("EEPROM"), Flash Memory) and a volatile storage unit (e.g., random access memory ("RAM")). Programming instructions that implement the functional teachings of the computing device 401 as described herein are typically maintained, persistently, in the memory 422 and used by the controller 440 which makes appropriate utilization of volatile storage during the execution of such programming instructions. Those skilled in the art recognize that the memory 422 is an example of computer readable media that may store programming instructions executable on the controller 440. Furthermore, the memory 422 is also an example of a memory unit and/or memory module and/or a non-volatile memory.

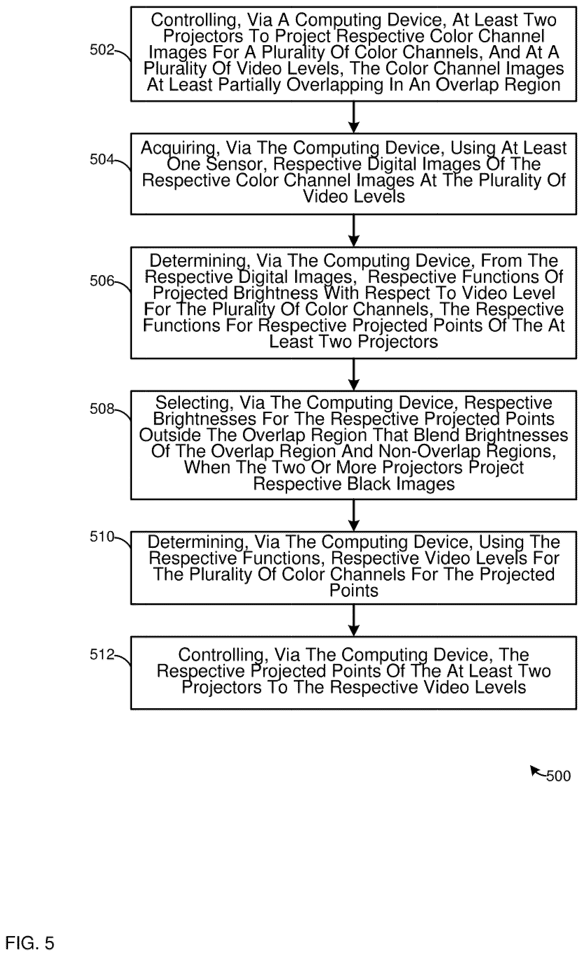

In particular, the memory 422 stores an application 430 that, when processed by controller 440, enables controller 440 and/or computing device 401 to implement specific digital black level blend functionality as described herein, and/or to implement a set of operations represented by the method of FIG. 5.

Indeed, attention is next directed to FIG. 5, which depicts a method 500 of controlling the system 400. The operations of the method 500 may correspond to machine readable instructions that are executed by the controller 440. The method 500 need not be performed in the exact sequence as shown and likewise various blocks may be performed in parallel rather than in sequence. Accordingly, the elements of method 500 are referred to herein as "blocks" rather than "steps." The method 500 may be implemented on variations of the system 400, as well.

Furthermore, in the following description of the method 500, video levels may comprise one or more of brightness levels and power levels of the two projectors 407. However, video level may be provided in any suitable format and/or using any suitable scale and/or units.

Furthermore, in the following description of the method 500, a plurality of color channels may comprise a red color channel, a green color channel and a blue color channel, however any suitable number of color channels, of any suitable set of colors, is within the scope of the present specification.

Similarly, in the following description of the method 500, a function of a given color channel may comprise a red function, a green function and a blue function, however any suitable number of color functions, for any suitable set of colors, is within the scope of the present specification. Furthermore, a function for a given color channel may include a red component, a green component and a blue component, though, for the given color channel, an intrinsic color function may dominate; for example, function for a red color channel may include a red component, a green component and a blue component, but the red component may be significantly higher than the green component and the blue component, such that the green component and the blue component may be ignored in some examples.

Furthermore, in the following description of the method 500, the at least one sensor 414 may comprise at least one digital camera, however any suitable sensor(s) that acquire digital images are within the scope of the present specification.

At a block 502, the controller 440, and/or the computing device 401, controls at least two projectors 407 to project respective color channel images for a plurality of color channels, and at a plurality of video levels, the color channel images at least partially overlapping in an overlap region 417.

At a block 504, the controller 440, and/or the computing device 401, acquires, using at least one sensor 414, respective digital images of the respective color channel images at the plurality of video levels.

At a block 506, the controller 440, and/or the computing device 401, determines, from the respective digital images, respective functions of projected brightness with respect to video level for the plurality of color channels, the respective functions for respective projected points of the at least two projectors 407.

At a block 508, the controller 440, and/or the computing device 401, selects respective brightnesses for the respective projected points outside the overlap region 417 that blend brightnesses of the overlap region 417 and non-overlap regions 418, when the at least two projectors 407 project respective black images.

At a block 510, the controller 440, and/or the computing device 401, determines, using the respective functions, respective video levels for the plurality of color channels for the projected points.

At a block 512, the controller 440, and/or the computing device 401, controls the respective projected points of the at least two projectors 407 to the respective video levels.

In specific examples, at the block 502, controlling the at least two projectors 407 to project respective color channel images for the plurality of color channels may comprise using a series of structured light patterns.

At the block 506, the respective functions may comprise respective linear functions, and, at the block 510, determining the respective video levels may be based on a respective brightness at a respective zero video level and a respective slope of a respective linear function for the plurality of color channels.

Put another way, at the block 506, the respective functions may comprise respective linear functions and respective intercepts with an ordinate axis represent a minimum achievable brightness of a respective color channel.

At the block 510, determining, using the respective functions, the respective video levels for the respective projected points of the at least two projectors 407, may comprise determining respective colors for the given projected points, the respective colors determined from relative respective video levels for the plurality of color channels.

The method 500 may further comprise: selecting further respective brightnesses for further respective projected points inside the overlap region 417 that blend the brightnesses of the overlap region 417 and the non-overlap regions 418, when the at least two projectors 407 project the respective black images; determining, using the respective functions, further respective video levels for the plurality of color channels for the further respective projected points; and controlling, via the computing device, the further respective projected points of the at least two projectors 407 to the further respective video levels.

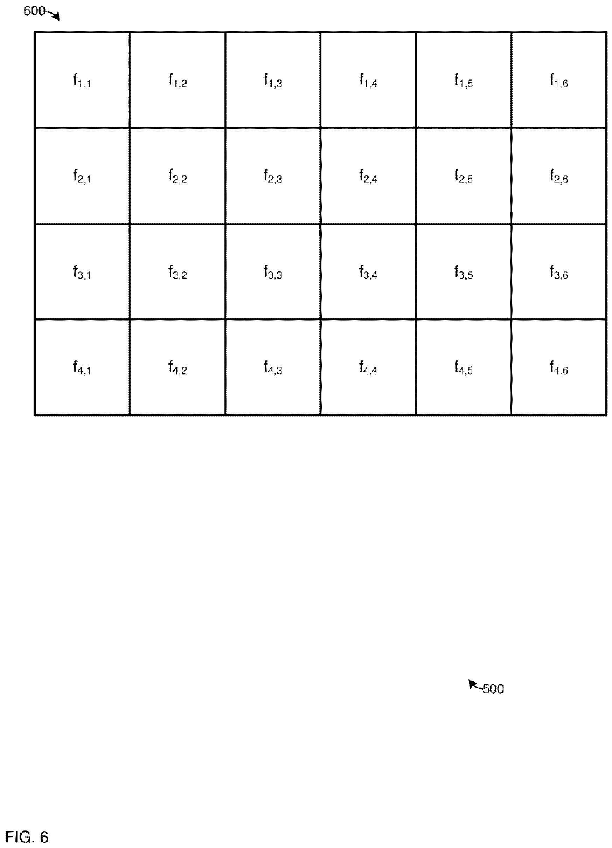

Aspects of the method 500 are next described with respect to FIG. 6 to FIG. 11, using three color channels (RGB), and presuming that the functions of the method 500 are linear functions.

In particular, it is understood that the blocks 502, 504 may be implemented in parallel such that the at least two projectors 407 project, at the block 502, the respective color channel images while the sensor 414 acquires respective digital images of the respective color channel images. In particular, the computing device 401 may control each projector 407 to project a series of structured light patterns, such as checkerboard patterns, stripes (e.g., in both a horizontal and vertical direction), and the like, of increasingly smaller squares, and/or of increasingly narrower stripes, increasingly fine patterns of dots and the like, while the sensor 414 acquires respective images of such structured light patterns (e.g., the respective color channel images).

Furthermore, black and white structured light patterns may be initially used to determined alignment of the projectors 407 and the sensor 414 (e.g., and correspondences of points therebetween), then full field solid color images may be projected at various brightness levels to determine the functions per point and per color channel. For example, once the point correspondences are determined using black and white structured light patterns, digital images of the full field solid color images may be processed to determine the brightness levels of various points of the full field solid color images.

The structured light patterns may be the same or different for each projector 407 and/or each color channel.

For example, same or different structured light patterns may be used with each projector 407. For example, checkerboard patterns may be used with one projector 407 and stripes may be used with another projector 407. For example, the projectors 407 may be at different angles relative to the screen 415 and some structured light patterns may be more effective at some angles than other angles; as such, different structured light patterns may be used depending on such angles.

Furthermore, for a given projector 407, once functions are determined for a first color channel, such as green, fewer and/or different structured light patterns may be used for other color channels, such as red and blue color channels, as the estimated functions for the first color channel may be similar to estimated functions for the other color channels. Indeed, estimated functions for the other color channels may be calculated as refinements of the functions for the first color channel, using, "less" structured light measurements and/or fewer structured light measurements. For example, alignment information may be obtained using fewer dots in structured light patterns by assuming the dot positions follow a similar function as the first color channel (e.g., which may have used more dots in structured light patterns).

Alternatively or in addition, color channel brightness information may be obtained with fewer brightness samples. For example, when a first color channel's brightness function was determined to be linear after five brightness samples, a second color channel's brightness function may be assumed to be linear and only two or three brightness samples may be used. In this example, curve fitting may be used for the five brightness samples for the first color channel to determine that the brightness is linear, and hence, for the other color channels, respective brightness functions may be assumed to be linear and only two or three brightness samples may be used rather than five (e.g., which may be a default number of brightness samples used until the nature of the brightness function of a first color channel is determined, and the like).

Furthermore, the computing device 401 may perform this process for combination of a projector 407 and a sensor 414 such that only one projector 407 is projecting structured light patterns for one color channel at any given time, though more than one sensor 414 may acquire digital images of the projected structured light patterns at any given time. Such a process is described in more detail in Applicant's US Patent No. 10089778, filed on August 7, 2015, and issued on October 2, 2018, as well as Applicant's US Patent No. 10630948, filed on September 26, 2018, and issued on April 21, 2020, which are both incorporated by reference herein. In certain examples, with three or more projectors 407, two of which have no overlapping regions, the computing device 401 may perform this process for combination of the two projectors 407 which have no overlapping regions and a sensor 414.

Furthermore, in the present specification, the structured light patterns are projected for different video levels. For example, when it is understood that projected brightness increases linearly with video level, the structured light patterns may be projected for at least two video levels (e.g., resulting in two sets of structured light patterns at different projected brightness levels), such that a linear function may be derived using projected brightness and video level for the two video levels, as depicted in FIG. 7, FIG. 8 and FIG. 9.

However, when it is understood that projected brightness increases non-linearly with video level (e.g., according to a non-linear function), the structured light patterns may be projected for more than two video levels, for example, corresponding to a highest order, plus one, of a known non-linear function type. For example, when it is understood that projected brightness increases quadratically with video level, the structured light patterns may be projected for at least three video levels.

Regardless, the video levels used to project the structured light patterns may be higher than a minimum video level, such that brightness of the structured light patterns is higher than a minimum brightness. Such a scheme may ensure that a sensor 414 acquires digital images of the structured light patterns in a brightness range that is compatible with a sensitivity of the sensor 414. Such video levels may be determined heuristically and/or from technical specifications of the sensor 414 that may indicate a brightness level below with the sensor 414 has limited sensitivity; in this example, video levels may be selected that result in projected brightnesses that are above such a brightness level below with the sensor 414 has limited sensitivity.

Hence, it is understood that a general type of function that defines the relationship between projected brightness and video level may be predetermined, and the number of video levels at which to project the structured light patterns may be selected accordingly.

Regardless, the result of use of such structured light patterns is a determination of:

- Correspondence between pixels of a sensor 414 and points of a respective projector 407 (e.g., as described with reference to Applicant's US Patent No. 10089778, filed on August 7, 2015, and issued on October 2, 2018, as well as Applicant's US Patent No. 10630948, filed on September 26, 2018, and issued on April 21, 2020).
- Correspondence between respective points of the projectors 407 e.g., as described with reference to Applicant's US Patent No. 10089778, filed on August 7, 2015, and issued on October 2, 2018, as well as Applicant's US Patent No. 10630948, filed on September 26, 2018, and issued on April 21, 2020).
- Functions of the different color channels for the points of the projectors.

While such structured light patterns may be used to efficiently determine the correspondences and functions, any other suitable process to determine the correspondences and functions are within the scope of the present specification including, but not limited to, controlling each projector 407 to raster through projection of respective points, one at a time, and the like.

With regards to determination of the correspondences, the computing device 401 may generally determine: respective points of the projectors 407 that are located in the overlap region 417; and further respective points of the projectors 407 that are located outside the overlap region 417 and/or in the non-overlap regions 418. Again, such a determination is described in Applicant's US Patent No. 10089778, filed on August 7, 2015, and issued on October 2, 2018, as well as Applicant's US Patent No. 10630948, filed on September 26, 2018, and issued on April 21, 2020.

Hence, using the correspondences, the computing device 401 may determine which respective points of the projectors 407 that are in the overlap region 417, and which respective points of the projectors 407 that are in the non-overlap regions 418. For example, points of the first projector 407-1 are determined to be in the overlap region 417 when such points have correspondences with points of the second projector 407-2. Similarly, points of the first projector 407-1 are determined to be in a non-overlap region 418 when such points have no correspondences with points of the second projector 407-2, and, conversely, points of the second projector 407-2 are determined to be in a non-overlap region 418 when such points have no correspondences with points of the first projector 407-1.

It is further understood that such correspondences furthermore provide an indication of a location of the points on the screen 415 and/or at least locations of the points relative to each other.

Turning now to the functions of the different color channels for the points of the projectors, attention is next directed to FIG. 6, which depicts a simplified version of an array 600 of four rows and six columns of points (e.g., which may correspond to an array pixels) of a projector 407, which each point associated with a respective function, "f", respectively labelled $f_{r,c}$ in FIG. 6, where "r" is a row number and "c" is a column number. Hence, for example, $f_{1,1}$ comprises a determined function for the first row and the first column, $f_{1,2}$ comprises a determined function for the first row and the second column, etc.

While twenty-four points are depicted, however, it is understood that a number of points for a projector 407 may be as high as a number of pixels of a projector (e.g., 8,294,400 pixels in a 3840 × 2160 pixel 4K projector), and/or the numbers of points for a projector 407 may depend on the resolution of the structured light patterns, and a point may encompass two pixels, five pixels, ten pixels, amongst other possibilities and the like.

It is further understood that each projector 407 is associated with a respective array similar to the array 600, though a number of respective points in the respective arrays may be the same or different.

Examples of functions of the array 600, and determinations thereof, are next described with respect to FIG. 7, FIG. 8 and FIG. 9, which depict measured sensor brightness as a function of projector video level for three different color channel image sets. It is understood that measured sensor brightness may be normalized: for example when more than one sensor 414 is used, a calibration may occur such that the sensors 414 are measuring a same brightness for a same projected point and hence such measurements may be normalized to a scale of 0% to 100%, and/or 0 to 1, on a normalized scale, with "0" being a minimum level brightness, and "100" and/or "1" being a maximum level brightness. However, when one sensor 414 is used, measured sensor brightness may also be normalized in a similar manner.

In particular, FIG. 7, FIG. 8 and FIG. 9 depict an example dataset collected for a particular point during implementation of the projectors 407 projecting color channel images (e.g., the structured light patterns) of various brightness and/or shades of red, green, and blue, at the block 502 of the method 500, and using the sensor 414 to acquire color images of the projected color channel images. It is further understood that the sensor 414 may measure red, green and blue light separately from each other using any suitable combination of sensors.

While in the dataset, four different video levels were used, to derive linear functions, it is understood that as few as two different video levels may be used for such linear functions.

With reference to FIG. 7, red images of four different video levels for a particular point for a particular projector 407 were used, and red color channel digital images were measured by the sensor 414 (e.g., using four sets of structured light patterns for the red color channel at the four different video levels). As the sensor 414 is generally configured to measure red, green and blue light, and as red color channel images may have a predominantly red component, but also green and blue components, an overall red function for the depicted point comprises a linear red function, $f_R$, a linear green function, $f_G$, and a linear blue function, $f_B$.

For example, as depicted in FIG. 7, an overall red function for the depicted point comprises:

$$f_R: \text{Brightness} = 249.47v + 0.0433 \ldots \text{Equation (1)}$$

$$f_G: \text{Brightness} = 84.384v + 0.1163 \ldots \text{Equation (2)}$$

$$f_B: \text{Brightness} = 27.795v + 0.1748 \ldots \text{Equation (3)}$$

In these functions "v" represents video level, and hence the value by which "v" is multiplied represents the slope of a function, and the value at v=0 represents a "y" and/or ordinate intercept and/or an intrinsic black level when the video level is at zero.

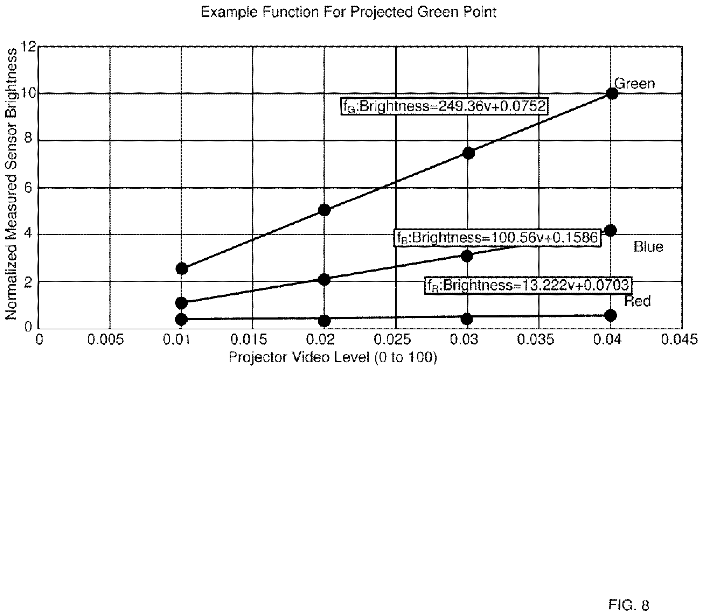

Furthermore, with reference to FIG. 8, green images of four different video levels for the same particular point of FIG. 7 and for the same particular projector 407 were used, and green color channel digital images were measured by the sensor 414 (e.g., using four sets of structured light patterns for the green color channel at the four different video levels) resulting in, as depicted in FIG. 8, an overall green function for the depicted point of:

$$f_R: \text{Brightness} = 13.222v + 0.0703 \ldots \text{Equation (4)}$$

$$f_G: \text{Brightness} = 249.36v + 0.0752 \ldots \text{Equation (5)}$$

$$f_B: \text{Brightness} = 100.56v + 0.0752 \ldots \text{Equation (6)}$$

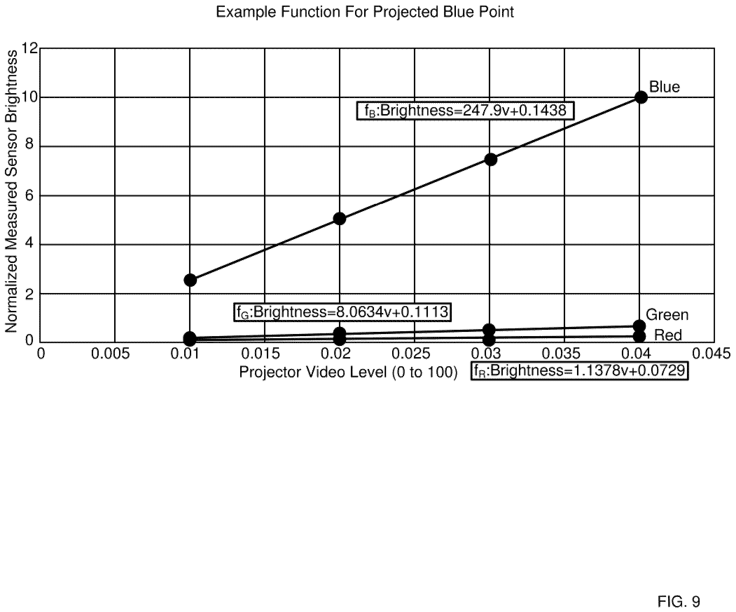

Furthermore, with reference to FIG. 9, blue images of four different video levels for the same particular point of FIG. 7 and FIG, 8, and for the same particular projector 407 were used, and blue color channel digital images were measured by the sensor 414 (e.g., using four sets of structured light patterns for the green color channel at the four different video levels) resulting in, as depicted in FIG. 9, an overall blue function for the depicted point of:

$$f_R: \text{Brightness} = 1.1378v + 0.0729 \ldots \text{Equation (7)}$$

$$f_G: \text{Brightness} = 8.0634v + 0.1113 \ldots \text{Equation (8)}$$

$$f_B: \text{Brightness} = 247.9v + 0.1438 \ldots \text{Equation (9)}$$

Hence, Equations (1) to (9) may represent a particular function $f_{r,c}$ for a particular point in the array 600 of FIG. 6.

Furthermore, in Equations (1) to (9), the y-intercept and slope for red, green and blue channels are understood to be determined, for measured brightness as a function of video level (e.g., projector power), when red, green and blue images are projected by a projector 407 onto a screen, and a sensor 414 is used to acquire color images of projected color channel images.

It is furthermore understood that any of the Equations (1) to (9) may be solved for video level "v" and a target brightness for a particular color channel may be input into such an equation in order to determine the video level to which a respective point may be controlled to achieve the target brightness.

For example, a video level that is applied to a given point is may be calculated based on the following equation:

$$Applied\ video\ level = \frac{target\ brightness\ level - intrinsic\ black\ level}{slope\ of\ measured\ brightness}...\text{Equation (10)}$$

The intrinsic black level of Equation (10) may be the y-intercept of a corresponding Equation (1) to (9), and the slope of Equation (10) may be the slope of the Equation (1) to (9). Indeed, Equation (10) represents any one of Equations (1) to (9), but rearranged to solve for "v", such that the "Applied video level" of Equation (10) corresponds to "v".

While Equation (10) assumes that the functons as desribed herein are linear, when such functions are of another type, Equation (10) may be adjusted accordingly to solve for applied video level.

It is furthermore understood that an example dataset similar to as depicted in FIG. 7, FIG. 8 and FIG. 9 may be collected for respective points of each projector 407. As such, it is understood that a set of nine equations may be determined for each of the points of the array 600.

However, in some examples, only the function corresponding to the intrinsic color of a color channel may be used in the method 500, for example at the block 510. For example, for the red color channel, only Equation (1) may be used, for the green color channel, only Equation (5) may be used, and for the blue color channel, only Equation (9) may be used.

Indeed, functions of colors that are not intrinsic colors of a color channel may be ignored in some examples as while the sensor 414 may "sense" non-intrinsic colors of a color channel, such non-intrinsic colors may not actually be present in the color channel. For example, a red color channel image may not include green light or blue light but the sensor 414 may nonetheless sense green light and blue light due to cross-talk. Hence, ignoring functions of colors that are not intrinsic colors of a color channel may eliminate such cross-talk. Put another way, using only Equations (1), (5) and (9) may eliminate such cross-talk; indeed, in some examples, Equations (2), (3), (4), (6), (7) and (8) may not be determined to save processing resources. It is nonetheless understood that red, green and blue receptors of the human eye may sense light of other colors but in a manner different from the specific color sensors of the sensor 414. Hence, while Equations (2), (3), (4), (6), (7) and (8) may not strictly represent "false" information, they may not represent response curves of receptors of the human eye and may be ignored and/or not determined. Put another way, processes provided herein are attempting to determine what the projectors 407 are projecting, not what the sensor 414 and/or a human eye is seeing.

Turning now to the block 508, it is understood that selecting respective brightnesses for the respective projected points outside the overlap region 417, that blend brightnesses of the overlap region 417 and non-overlap regions 418, when the at least two projectors 407 project respective black images, may occur in any suitable manner.

For example, the computing device 401 may determine an average brightness and color of points inside the overlap region 417 may be determined using the functions determined at the block 506. For example, presuming a respective set of Equations (1) to (9) are determined for a pair of points, one from each projector 407, that overlap in the overall region 417, the y-intercepts from the respective sets of Equations (1) to (9) may be added together to determine the brightness of such a pair of points and relative amounts of red, green and blue light defined by the y-intercepts may be used to determine color of such pairs of points. Such a determination may occur for each pair of points in the overlap region 417.

For example, by determining which points of the projectors 407 are in the overlap region 41, respective brightnesses at the y-intercepts of the equations of corresponding points may be determined and added together to get a total respective black level brightness in the overlap region 41 for the points in the overlap region 417, which may be averaged to determine an average brightness. A similar process is used to determine an average color of the black level of the overlap region 417.

In these examples, the average brightness and average color may be selected as the target brightness and target color for points in the non-overlap regions 418, and video levels for the respective points in the non-overlap regions 418 may be determined (e.g., at the block 510) that correspond to the target brightness and target color may be determined using respective functions (e.g., Equation (10) may be used with y-intercepts and slopes from respective Equations (1) to (9)).

The respective points in the non-overlap regions 418 may be controlled (e.g., at the block 512) to the target brightness and target color using the video levels determined from Equation (10). In this example, the "black" brightness and/or color of points outside the overlap region 417 may be controlled to the "black" brightness and/or color of points inside the overlap region 417. Put another way, light is added to the non-overlap regions 418 to increase the "black" brightness of the non-overlap regions 418 to the "black" brightness of the overlap region 417, and relative amounts of red, green and blue light may be adjusted in the non-overlap regions 418 to bring the color of the non-overlap regions 418 to the color of the overlap region 417. However, any suitable scheme may be used to "smooth" edges of the overlap region 417.

For example, to smooth away edges of the overlap region 417, relatve to adjacent non-overlap regions 418, light may be added to portions of non-overlap regions 418 of projected images 416 that are adjacent to overlap region 417 (and not the entirety of the non-overlap regions 418). The amount of light that may be added may be determined based on methods described in US10298893B2 entitled "System And Method For Digital Black Level Blending", issued on May 21, 2019 to Christie Digital Systems USA, Inc. (e.g., the same Applicant of the present specification), and incorporated herein by reference. In brief summary, however, rather than control all points in the non-overlap regions 418 to a same brightness and color, points in portions of the non-overlap regions 418 adjacent the overlap region 417 may be controlled to grade brightness and/or color from a brightness and/or color of points in the overlap region 417 adjacent the non-overlap regions 418, to a brightness and/or color of points in the non-overlap regions 418, thereby "smoothing" away abrupt transitions of brightness and/or color at edges between the overlap region 417 and the non-overlap regions 418.

In some of these examples, to smooth out the overlap regions 417 between different projectors 407 that are projecting overlapping images 416, samples (e.g., digital images of projected images 416) may be generally acquired near the edges of the overlap regions 417. Put another way, in these examples, rather than determine functions for all points of given projector 407, correspondences between points of the projectors 407 may be determined using a first set of structured light patterns at a first video level, and functions may be determined only for those points that are within a given distance of edges of the overlap regions 417 (e.g., such as 10%, 20%, 30% of a length and/or width of an overlap region 417, and the like). For example, a second set of structured light patterns at a second video level may be used, but to characterize only those points that are within a given distance of edges of the overlap regions 417.

Hence, it is further understood that the smoothing away of edges of the overlap region 417 may further include adjusting for color and not just brightness. For example, when images projected by one projector 407 is dominated by a red tint, and images projected by the other projector 407 is dominated by a blue tint (e.g., as described with respect to FIG. 3), a "black" of the overlap region 417 may be purple tinted. As such, not only is brightness of non-overlap regions 418, adjacent to the overlap regions 417, be raised, but the color of such non-overlap regions 418, adjacent to the overlap region 417, may be adjusted using the respective functions to blend with a color of the overlap region 417.

It is further understood that such blending may include changing brightness and/or color of points within the overlap region 417. For example, in the overlap region 417, there may be a brightness and/or color variation across points of the overlap region, brightness and/or color of points in the overlap region 417 may be adjusted to better blend with colors of points in adjacent non-overlap regions 418.

It is further understood that a similar process may be used for a single projector 407 when a projected black image 416 is non-uniform. For example, when corners of a projected black image 416 are of different brightness than a center of the projected black image 416, and/or are of different colors, brightness and/or color of points across the projected black image 416 may be adjusted using the determined functions to achieve a black that is uniform in brightness and/or color across the projected black image 416. In these examples, relative black level brightness and/or color of a projected black image 416 of a projector 407 may be determined using the determined functions, and video levels of points that minimize brigthness and/or color differences may be determined and applied to the points.

Put another way, once each projector 407 has been characterized as described herein, a brightness and color value for any point of a projected image 416 for any of the projectors 407 may be calculated and respective video levels may be determined, using the determined functions, that correspond to the brightness and color values. The points of the projectors 407 may be controlled accordingly,

Furthermore, to adjust for the non-uniformity of the black level of a given projector 407, and/or overlap regions 417 of a plurality of projectors 407, a target video level corresponding to a target black level may be generally determined for each point of each color channel of the given projector 407 and/or the plurality of projectors 407. The black levels may be calculated across the points of a given projector 407 may define what an actual target black level should be. Furthermore, the video level may be independently calculated for each point of each color channel. Furthermore, to account for the non-uniform black level of a single projector 407, samples are generally acquired throughout the entire projected area for a single projector 407.

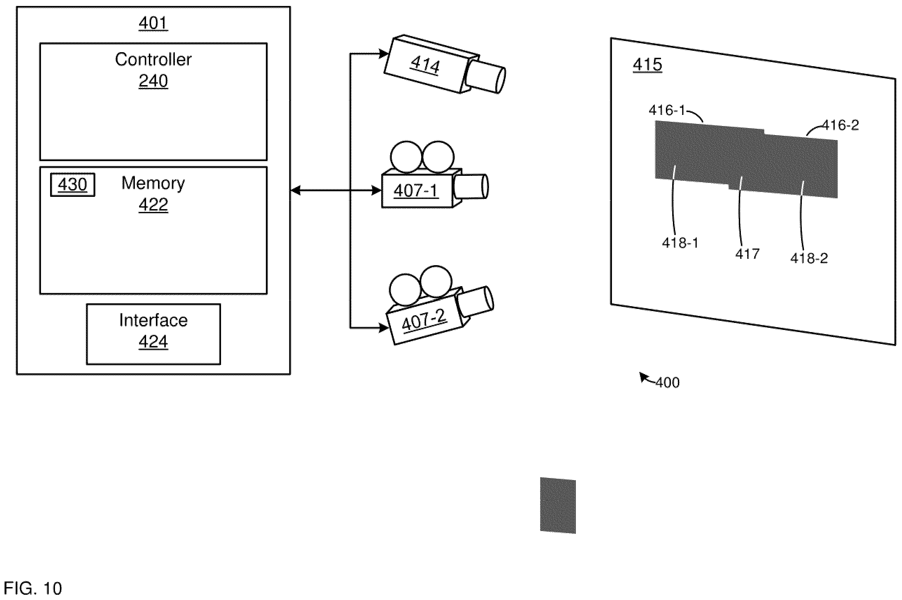

Indeed, attention is next directed to FIG. 10, which depicts the system 400 after implemenation of the method 500. In particular, a brightness and color of the non-overlap regions 418 has been controlled to a same (e.g., average) brightness and color of the overlap region 41. The white line around the overlap region 417 has been removed, relative to FIG. 4, to show that the edge of the overlap region 417 has been blended with the adjacent edges of the non-overlap regions 418.

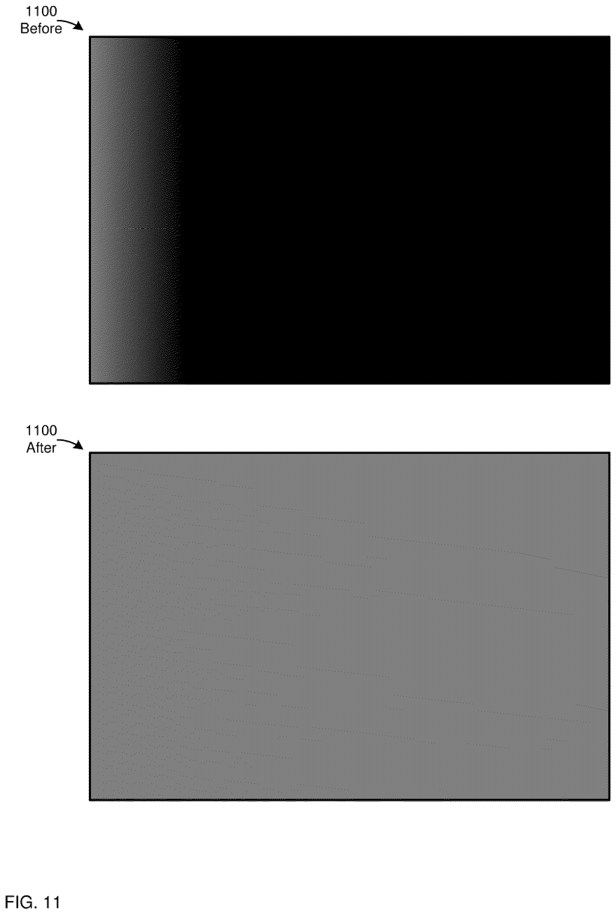

Indeed, attention is next directed to FIG. 11, which depicts a black image 1100 projected by a projector 407 before and after implementation of the method 500. In particular, a brightness of the black image 1100 before implementation of the method 500, as adapted for a single image and/or single projector 407, is depicted as being higher at a left edge than at the remainder of the black image 1100. However, the black image 1100 after implementation of the method 500, as adapted for a single image and/or single projector 407, is depicted as being uniform, with brightness of the remainder of the black image 1100 being raised to the brightness of the left edge. While vartations in color are not depicted, any variations in color may be similarly corrected. In particular, functions were determined for the points of the image 1100, a target brightness and/or color was selected corresponding to an average brightness and/or average color along the left edge, and the points of the image 1100 were controlled to the target brightness and/or color by controlling video levels of the projector 407 accordingly.

Aspects of calibration and/or normalization of sensors 414 is next described.

As described herein, one or more sensors 414 (e.g., cameras) may be used to assist with determination of the functions, and such sensors 414 may generally have different sensitivity to different light sources. Hence, initially, one or more sensors 414 may be calibrated to each projector 407. For example, a projector 407 may be controlled to project a relatively bright white image onto the screen 415, and the relatively bright white image may be sensed and/or acquired in a manner such that the relatively bright white image is not over exposed at a sensor 414 in any color channel.

For example, overexposure in a color channel may include at least one pixel and/or point being at a maximum brightness level for a sensor 414 for at least one color channel because the at least one pixel and/or point may be clamped. For example, digital cameras may return brightness levels between 0 and 255, and the like (e.g., or on a scale of 0 to 1, or on a scale of 0 to 100%, and the like). Indeed, when a pixel is at a maximum brightness, then there is a possibility the pixel measurement was "cut off": in other words it is impossible to know if the pixel is actually at maximum brightness or above maximum brightness.

For example, if a pixel is at 255 (e.g., a maximum) in a digital image acquired by the sensor 414, exposure of the sensor 414 could be halved and another digital image acquired; if the same pixel is now 200 (at half exposure) then the first measurement should have been 400, but was clamped to 255. Worse, if the pixel is still at 255, then the first measurement should have been over 510 and there is still no determination of actual brightness.

Hence, controlling a sensor 414 to sense a relatively bright white image on the screen 415 in a manner such that the relatively bright white image is not over exposed at a sensor 414 in any color channel may include sensing and/or acquiring such a bright white image at different exposures, in a feedback loop with the sensor 414, until no pixels in the digital images have values at 255 (or a corresponding maximum), and/or until only a minimum of pixels in the digital images have values at 255 (or a corresponding maximum), where the minimum may be selected to be less than 1% of the pixels, less than 0.5% of the pixels, less than 0.1% pixels, amongst other possibilities.

As described herein, a described with respect to FIG. 3, an image acquired by a sensor 414 of the white image as projected by a lamp-based projector 407 may generally appear blue, and an image acquired by the sensor 414 of the bright white image as projected by a laser-based projector 407 may generally appear red, even though both projectors 407 are projecting the same white image (e.g., white to the human eye). Put another way, respective images of a same white image projected by different types projectors 407, acquired by a same sensor 414, may have different levels of red and blue (and/or green, and the like). It is understood that this is an example using two specific projectors 407, and a same sensor 414 may acquire images of different tints, from white images projected by different lamp-based projectors 407, and/or a same sensor 414 may acquire images of different tints, from white images projected by different laser-based projectors 407.

Hence, as not all sensors 414 acquire images from different projectors 407 in a similar manner, when more than one sensor 414 is used, the sensors 414 may be calibrated to each other, so that a measurement from a first sensor 414 may be compared to one from a second sensor 414. (Even identical sensor 414 models may result have different measurements because each sensor's aperture may be modified manually.) Sensors 414 may be calibrated to each other as long as they acquire at least some common light (e.g., different sensors 414 are used to acquire same projected images).

After acquiring a sensor 414 image of a white projected image, a next step may be to calibrate a sensor 414 reading so that the sensor 414 image appears white instead of tinted. This may be done by first determining an average pixel value (e.g., brightness) of all three (e.g., red, green and blue) color channels. Then, a scale ratio may be calculated to bring each color channel to the average pixel value. This scale ratio is then used whenever a data point is measured for that sensor 414/projector 407 pair.

Furthermore, projecting images of various shades of red, green, and blue, as described herein, and using a sensor 414 to acquire color images of the projected images may be beneficial in cases where the color channels of the sensor 414 are affected by other colors, for example, when a color sensor type of the sensor 414 is at least partially activated when light of other colors is acquired by the sensor 414 (e.g., as shown by the Equations (1) to (9)).

In some examples, one or more monochrome sensors 414 may be used to acquire digital images, while the projectors 407 are controlled to project the color channel images as described herein. Such an example may avoid the cross talk between color sensors color sensors 414 as only brightness of points of the color channel images is being detected in the one or more monochrome sensors 414 and not specific colors

Furthermore, when brighter images are projected, such that a channel measurement of a sensor 414 is overexposed when the sensor 414 is acquiring a particular image of the projected brighter images, the exposure of the sensor 414 may be reduced and a new image may be acquired. Then, the subsequent reading may be "normalized" to the previous exposure by scaling the reading by the ratio between the old exposure and the new exposure.

As should by now be apparent, the operations and functions of the devices described herein are sufficiently complex as to require their implementation on a computer system, and cannot be performed, as a practical matter, in the human mind. In particular, computing devices such as set forth herein are understood as requiring and providing speed and accuracy and complexity management that are not obtainable by human mental steps, in addition to the inherently digital nature of such operations (e.g., a human mind cannot interface directly with digital projectors, nor project light, etc.).

It is further understood that instance of the term "configured to", such as "a computing device configured to...", "a processor configured to...", "a controller configured to...", and the like, may be understood to include a feature of a computer-readable storage medium having stored thereon program instructions that, when executed by a computing device and/or a processor and/or a controller, and the like, may cause the computing device and/or the processor and/or the controller to perform a set of operations which may comprise the features that the computing device and/or the processor and/or the controller, and the like, are configured to implement. Hence, the term "configured to" is understood not to be unduly limiting to means plus function interpretations, and the like.

Furthermore, descriptions of one processor and/or controller and/or device and/or engine, and the like, configured to perform certain functionality is understood to include, but is not limited to, more than one processor and/or more than one controller and/or more than one device and/or more than one engine, and the like performing such functionality.

It is understood that for the purpose of this specification, language of "at least one of X, Y, and Z" and "one or more of X, Y and Z" may be construed as X only, Y only, Z only, or any combination of two or more items X, Y, and Z (e.g., XYZ, XY, YZ, XZ, and the like). Similar logic may be applied for two or more items in any occurrence of "at least one..." and "one or more..." language.

The terms "about", "substantially", "essentially", "approximately", and the like, are defined as being "close to", for example as understood by persons of skill in the art. In some examples, the terms are understood to be "within 10%," in other examples, "within 5%", in yet further examples, "within 1%", and in yet further examples "within 0.5%".

Persons skilled in the art will appreciate that there are yet more alternative examples and modifications possible, and that the above examples are only illustrations of one or more examples. The scope, therefore, is only to be limited by the claims appended hereto.

**Claims**

1. A method comprising:

    controlling, via a computing device, at least two projectors to project respective color channel images for a plurality of color channels, and at a plurality of video levels, the color channel images at least partially overlapping in an overlap region;

    acquiring, via the computing device, using at least one sensor, respective digital images of the respective color channel images at the plurality of video levels;

    determining, via the computing device, from the respective digital images, respective functions of projected brightness with respect to video level for the plurality of color channels, the respective functions for respective projected points of the at least two projectors;

    selecting, via the computing device, respective brightnesses for the respective projected points outside the overlap region that blend brightnesses of the overlap region and non-overlap regions, when the at least two projectors project respective black images;

    determining, via the computing device, using the respective functions, respective video levels for the plurality of color channels for the projected points; and

    controlling, via the computing device, the respective projected points of the at least two projectors to the respective video levels.

2. The method of claim 1, wherein controlling the at least two projectors to project respective color channel images for the plurality of color channels comprises a using a series of structured light patterns.

3. The method of any one of claim 1 or claim 2, wherein the respective functions comprise respective linear functions, and determining the respective video levels is based on a respective brightness at a respective zero video level and a respective slope of a respective linear function for the plurality of color channels.

4. The method of any one of claim 1 to claim 3, wherein the respective functions comprise respective linear functions and respective intercepts with an ordinate axis represent a minimum achievable brightness of a respective color channel.

5. The method of any one of claim 1 to claim 4, wherein determining, using the respective functions, the respective video levels for the respective projected points of the at least two projectors, further comprises determining respective colors for the given projected points, the respective colors determined from relative respective video levels for the plurality of color channels.

6. The method of any one of claim 1 to claim 5, further comprising:

    selecting further respective brightnesses for further respective projected points inside the overlap region that blend the brightnesses of the overlap region and the non-overlap regions, when the at least two projectors project the respective black images;

determining, using the respective functions, further respective video levels for the plurality of color channels for the further respective projected points; and

controlling, via the computing device, the further respective projected points of the at least two projectors to the further respective video levels.

7. The method of any one of claim 1 to claim 6, wherein the plurality of color channels comprise a red color channel, a green color channel and a blue color channel; and/or

wherein a function of a given color channel comprise a red function, a green function and a blue function; and/or
wherein the video levels comprise one or more of brightness levels and power levels of the two projectors.

8. A computing device comprising:

a controller; and
a computer-readable storage medium having stored thereon program instructions that, when executed by the controller, causes the controller to perform a set of operations comprising:

controlling at least two projectors to project respective color channel images for a plurality of color channels, and at a plurality of video levels, the color channel images at least partially overlapping in an overlap region;
acquiring, using at least one sensor, respective digital images of the respective color channel images at the plurality of video levels;
determining, from the respective digital images, respective functions of projected brightness with respect to video level for the plurality of color channels, the respective functions for respective projected points of the at least two projectors;
selecting respective brightnesses for the respective projected points outside the overlap region that blend brightnesses of the overlap region and non-overlap regions, when the at least two projectors project respective black images;
determining, using the respective functions, respective video levels for the plurality of color channels for the projected points; and
controlling the respective projected points of the at least two projectors to the respective video levels.

9. The computing device of claim 8, wherein controlling the at least two projectors to project respective color channel images for the plurality of color channels comprises using a series of structured light patterns.

10. The computing device of any one of claim 8 or claim 9, wherein the respective functions comprise respective linear functions, and determining the respective video levels is based on a respective brightness at a respective zero video level and a respective slope of a respective linear function for the plurality of color channels.

11. The computing device of any one of claim 8 to claim 10, wherein the respective functions comprise respective linear functions and respective intercepts with an ordinate axis represent a minimum achievable brightness of a respective color channel.

12. The computing device of any one of claim 8 to claim 11, wherein determining, using the respective functions, the respective video levels for the respective projected points of the at least two projectors, further comprises determining respective colors for the given projected points, the respective colors determined from relative respective video levels for the plurality of color channels.

13. The computing device of any one of claim 8 to claim 12, wherein the set of operations further comprise:

selecting further respective brightnesses for further respective projected points inside the overlap region that blend the brightnesses of the overlap region and the non-overlap regions, when the at least two projectors project the respective black images;
determining, using the respective functions, further respective video levels for the plurality of color channels for the further respective projected points; and
controlling, via the computing device, the further respective projected points of the at least two projectors to the further respective video levels.

14. The computing device of any one of claim 8 to claim 13, wherein the plurality of color channels comprise a red color channel, a green color channel and a blue color channel; and/or

   wherein a function of a given color channel comprise a red function, a green function and a blue function; and/or
   wherein the video levels comprise one or more of brightness levels and power levels of the two projectors.

15. The computing device of any one of claim 8 to claim 14, wherein the at least one sensor comprise at least one of a charge coupled device and a digital camera.

FIG. 1

PRIOR ART

Brightness and Tint Changes

Brightness and Tint Changes

Brightness and Tint Changes 200

Brightness and Tint Changes

PRIOR ART

FIG. 2

Lamp-Based Projector

Laser-Based Projector

Bluish Image

Reddish Image

300A

300B

PRIOR ART

FIG. 3

EP 4 622 250 A1

FIG. 4

```
┌─────────────────────────────────────────────────────┐
│  Controlling, Via A Computing Device, At Least Two    │
│    Projectors To Project Respective Color Channel     │
502│  Images For A Plurality Of Color Channels, And At A   │
│  Plurality Of Video Levels, The Color Channel Images  │
│    At Least Partially Overlapping In An Overlap Region │
└─────────────────────────────────────────────────────┘
```

```
┌─────────────────────────────────────────────────────┐
│  Acquiring, Via The Computing Device, Using At Least  │
504│    One Sensor, Respective Digital Images Of The       │
│  Respective Color Channel Images At The Plurality Of  │
│                   Video Levels                        │
└─────────────────────────────────────────────────────┘
```

```
┌─────────────────────────────────────────────────────┐
│  Determining, Via The Computing Device, From The      │
│  Respective Digital Images, Respective Functions Of   │
506│   Projected Brightness With Respect To Video Level    │
│  For The Plurality Of Color Channels, The Respective  │
│  Functions For Respective Projected Points Of The At  │
│                  Least Two Projectors                 │
└─────────────────────────────────────────────────────┘
```

```
┌─────────────────────────────────────────────────────┐
│    Selecting, Via The Computing Device, Respective    │
│   Brightnesses For The Respective Projected Points    │
508│Outside The Overlap Region That Blend Brightnesses    │
│   Of The Overlap Region And Non-Overlap Regions,      │
│     When The Two Or More Projectors Project           │
│                Respective Black Images                │
└─────────────────────────────────────────────────────┘
```

```
┌─────────────────────────────────────────────────────┐
510│  Determining, Via The Computing Device, Using The     │
│  Respective Functions, Respective Video Levels For    │
│  The Plurality Of Color Channels For The Projected    │
│                      Points                           │
└─────────────────────────────────────────────────────┘
```

```
┌─────────────────────────────────────────────────────┐
512│      Controlling, Via The Computing Device, The       │
│  Respective Projected Points Of The At Least Two      │
│      Projectors To The Respective Video Levels        │
└─────────────────────────────────────────────────────┘
```

500

FIG. 5

600

| $f_{1,1}$ | $f_{1,2}$ | $f_{1,3}$ | $f_{1,4}$ | $f_{1,5}$ | $f_{1,6}$ |
|---|---|---|---|---|---|
| $f_{2,1}$ | $f_{2,2}$ | $f_{2,3}$ | $f_{2,4}$ | $f_{2,5}$ | $f_{2,6}$ |
| $f_{3,1}$ | $f_{3,2}$ | $f_{3,3}$ | $f_{3,4}$ | $f_{3,5}$ | $f_{3,6}$ |
| $f_{4,1}$ | $f_{4,2}$ | $f_{4,3}$ | $f_{4,4}$ | $f_{4,5}$ | $f_{4,6}$ |

500

FIG. 6

Example Function For Projected Red Point

$f_R$:Brightness=249.47v+0.0433

$f_G$:Brightness=84.384v+0.1163

$f_B$:Brightness=27.795v+0.1748

RED

GREEN

BLUE

Normalized Measured Sensor Brightness

Projector Video Level (0 to 100)

FIG. 7

Example Function For Projected Green Point

FIG. 8

Example Function For Projected Blue Point

$f_B$:Brightness=247.9v+0.1438

$f_G$:Brightness=8.0634v+0.1113

$f_R$:Brightness=1.1378v+0.0729

Blue

Green

Red

Projector Video Level (0 to 100)

Normalized Measured Sensor Brightness

FIG. 9

EP 4 622 250 A1

FIG. 10

EP 4 622 250 A1

1100
Before

1100
After

FIG. 11

Europäisches
Patentamt

European
Patent Office

Office européen
des brevets

## EUROPEAN SEARCH REPORT

**Application Number**

EP 25 16 4874

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | ADITI MAJUMDER ET AL: "Perceptual photometric seamlessness in projection-based tiled displays", ACM TRANSACTIONS ON GRAPHICS, vol. 24, no. 1, 1 January 2005 (2005-01-01), pages 118-139, XP055462546, US ISSN: 0730-0301, DOI: 10.1145/1037957.1037964 * 4.1 Reconstruction * * 4.2 Modification * * 4.3 Reprojection * * table I * * figure 9 * * figure 1 * * 5. Smoothing display luminance functions * | 1-15 | INV. H04N9/31 |
| X | US 2007/291047 A1 (HARVILLE MICHAEL [US] ET AL) 20 December 2007 (2007-12-20) * figure 1A * * paragraph [0025] * * paragraph [0040] - paragraph [0042] * * paragraph [0045] - paragraph [0047] * * paragraph [0118] - paragraph [0133] * * paragraph [0143] - paragraph [0144] * * paragraph [0168] - paragraph [0172] * | 1-15 | **TECHNICAL FIELDS SEARCHED (IPC)** H04N |
| A | US 2018/139422 A1 (MOULE KEVIN [CA] ET AL) 17 May 2018 (2018-05-17) * paragraph [0165] * * paragraph [0058] * * figure 2 * * figures 7-10 * * paragraph [0103] - paragraph [0120] * | 1-15 | |

The present search report has been drawn up for all claims

| Place of search | Date of completion of the search | Examiner |
|---|---|---|
| The Hague | 4 July 2025 | Lim, Johan |

EPO FORM 1503 03.82 (P04C01)

**EP 4 622 250 A1**

## ANNEX TO THE EUROPEAN SEARCH REPORT
## ON EUROPEAN PATENT APPLICATION NO.

EP 25 16 4874

This annex lists the patent family members relating to the patent documents cited in the above-mentioned European search report.
The members are as contained in the European Patent Office EDP file on
The European Patent Office is in no way liable for these particulars which are merely given for the purpose of information.

04-07-2025

| Patent document cited in search report | Publication date | Patent family member(s) | Publication date |
|---|---|---|---|
| US 2007291047 A1 | 20-12-2007 | NONE | |
| US 2018139422 A1 | 17-05-2018 | EP 3331241 A2 | 06-06-2018 |
| | | US 2018139422 A1 | 17-05-2018 |

EPO FORM P0459

For more details about this annex : see Official Journal of the European Patent Office, No. 12/82

28

# EP 4 622 250 A1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63567995
- US 04843125
- US 10089778 B
- US 10630948 B
- US 10298893 B2